# EUROPÄISCHE PATENTSCHRIFT

(11) **EP 0 342 180 B1**
(45) Veröffentlichungstag und Bekanntmachung des Hinweises auf die Patenterteilung: **12.10.1994**
(21) Anmeldenummer: 89890125.1
(22) Anmeldetag: 27.04.1989
(51) Int. Cl.: G02B 6/44

(54) **Muffe für Lichtwellenleiter**
Junction box for an optical waveguide
Boîte de raccordement pour fibres optiques

(30) Priorität: 11.05.1988 AT 1241/88
(43) Veröffentlichungstag der Anmeldung: 15.11.1989
(73) Patentinhaber: FELTEN & GUILLEAUME AUSTRIA AG, 3943 Schrems-Eugenia 1 (AT)
(72) Erfinder: Hannes, Wittine, A-3970 Weitrach Niederösterreich (AT)
(74) Vertreter: Beer, Manfred, Dipl.-Ing.

(56) Entgegenhaltungen:
- DE-A- 2 950 833
- DE-A- 3 236 213
- DE-A- 3 428 615

## Beschreibung

Die Erfindung betrifft eine Muffe für Lichtwellenleiter mit einem aus Unterteil und Deckel bestehenden Gehäuse mit wenigstens einer Kabeleinführung, wobei Unterteil und Deckel des Gehäuses dicht miteinander verbunden werden können, und mit im Gehäuse angeordneten Spleißschutzvorrichtungen in Form von Taschen, in welchen je ein Spleiß aufgenommen ist.

Derartige Muffen sind in verschiedenen Ausführungsformen bekannt (DE-A-34 28 615), wobei zum Schutz der Spleiße Spleißträger (Taschen) vorgesehen sind, die in Spleißträgerhalterungen in der Muffe einzusetzen sind. Die Handhabung der bekannten Spleißträger ist insbesondere, wenn in der Muffe eine Vielzahl von Spleißen herzustellen und getrennt voneinander unterzubringen ist, aufwendig und erschwert die Verwendung der bekannten Muffen.

Aus der DE-A-29 50 833 ist eine Aufnahmevorrichtung für in Schlaufen gelegte, miteinander verbundene Lichtwellenleiter bekannt, bei der für jede Schlaufe eine taschenartige Schutzhülle vorgesehen ist. Mehrere solcher Schutzhüllen können zu einem Heft zusammengefaßt werden. Jede Schutzhülle der DE-A-29 50 833 besteht aus einer rechteckförmigen Grundlage und einer in der Mitte in zwei Rechtecke unterteilten Decklage, wobei zwischen den beiden Teilen der Decklage ein Schlitz vorgesehen ist, der von der Taschenöffnung ausgeht und kurz vor dem Taschenboden endet. Diese Taschen gemäß der DE-A-29 50 833 können in einem Umschlag vorgesehen sein, wobei am Rücken des Umschlages Halterungen für die Lichtwellenleiterbündel vorgesehen sind.

Eine andere Ausführungsform einer Tasche für Lichtleitfasern ist aus der DE-A-32 36 213 bekannt und besteht aus zwei die Taschenflächen bildenden, ohne Schlitze oder Unterteilungen ausgebildeten Lagen, wobei eine der Lagen mit einer Lasche versehen ist, über welche die Tasche an einer Halterung in Form einer Schiene mit Aufhängezapfen befestigt werden kann. Zu beiden Seiten sind an der Schiene Entlastungsvorrichtungen für die an- bzw. abführenden Lichtleitfasern vorgesehen. Zum weiteren Schutz eines aus Taschen und der Halterungsschiene gebildeten Heftes von Schutzhüllen kann außen eine Schutzfolie herumgelegt werden.

Der Erfindung liegt die Aufgabe zugrunde, eine Muffe der eingangs genannten Art derart weiterzubilden, daß die Spleiße einfach in die Taschen eingelegt werden können, so daß sich die Handhabung der Muffe vereinfacht.

Erfindungsgemäß wird diese Aufgabe dadurch gelöst, daß die Muffe am Boden des Unterteils des Gehäuses in das Innere des Gehäuses ragende Haken aufweist, auf welche die Taschen, die an einem ihrer Ränder Löcher aufweisen, eingehängt werden, und daß die gebogenen, freien Enden der Haken bis unter den oberen Rand des Unterteils des Gehäuses ragen.

Durch die erfindungsgemäße Ausbildung der Haken für die Taschen ergeben sich bei Verwendung der erfindungsgemäßen Muffe erhebliche Vorteile. Zunächst können die Taschen einfach und einzeln so umgelegt werden, daß sie am Rand des Unterteils des Gehäuses bzw. auf dort schon aufliegenden Taschen aufliegen, ohne daß die Gefahr besteht, daß die Taschen in dieser Stellung von den Haken unbeabsichtigt freikommen. Falls eine (oder mehrere) nicht benötigte Tasche(n) aus der Muffe entfernt oder eine (oder mehrere) zusätzliche Tasche(n) in die Muffe eingesetzt werden sollen, damit alle Spleiße untergebracht werden können, ist dies ohne Betätigung von Schrauben, Hebeln od. dgl. möglich, weil die Taschen nach dem Schrägstellen einfach in die Haken eingehängt oder von diesen ausgehängt werden können.

Die richtige Lage der Taschen in der Muffe wird besonders einfach gewährleistet, wenn gemäß einer bevorzugten Ausführungsform der Erfindung vorgesehen ist, daß vom Boden des Unterteils des Gehäuses nach oben ragende Rippen zum Abstützen der Taschen vorgesehen sind, deren freie Ränder vom Boden des Unterteils einen kleineren Abstand besitzen als die freien Enden der Haken.

Mit Vorteil ist erfindungsgemäß vorgesehen, daß am Boden des Unterteils des Gehäuses im Bereich der Ecken desselben Vorsprünge mit Befestigungsmitteln für Zugentlastungsteile der Lichtwellenleiter vorgesehen sind. Dadurch ergibt sich eine räumlich günstige Aufteilung des Raumes innerhalb der Muffe.

Eine einfache Konstruktion der Muffe ist dadurch gekennzeichnet, daß die Haken für die Taschen in eine der Rippen eingesetzt sind.

Die erfindungsgemäße Muffe besitzt vorzugsweise ein Gehäuse aus Kunststoff und ist bevorzugt als End-, Durchgangs-, Abzweig- oder Verteilermuffe ausgebildet.

Weitere Einzelheiten und Merkmale der Erfindung ergeben sich aus der nachstehenden Beschreibung des in den Zeichnungen wiedergegebenen Ausführungsbeispieles. Es zeigt:
Fig. 1 eine Innenansicht des Bodens des Gehäuses einer Muffe,
Fig. 2 teilweise im Schnitt eine geschlossene Muffe und

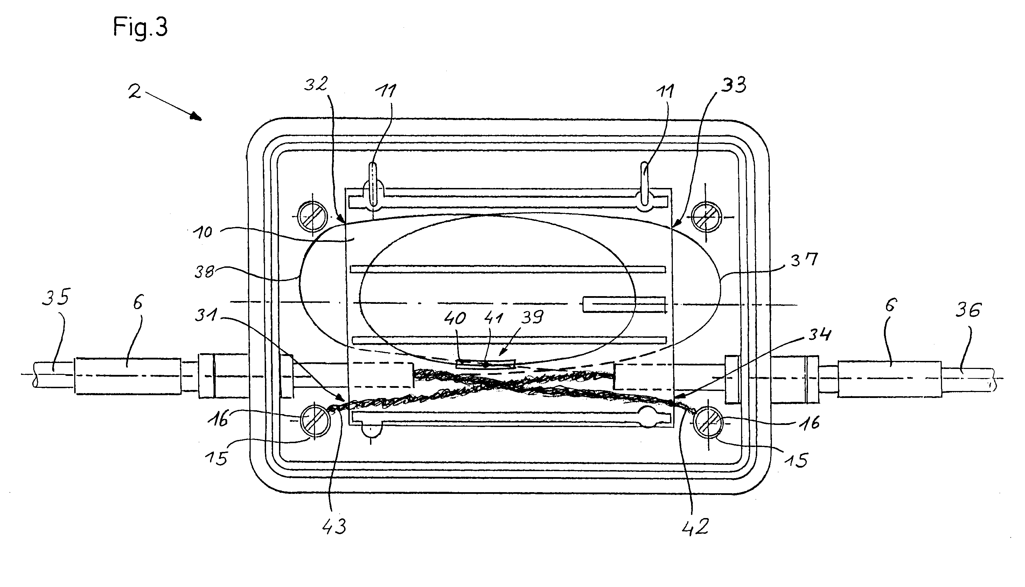

Fig. 3 den Unterteil einer Muffe mit einer Tasche mit eingelegtem Spleiß.

Die Muffe besitzt ein Gehäuse 1, das aus einem Unterteil 2 und einem Deckel 3 besteht. Unterteil 2 und Deckel 3 sind identisch ausgebildete Formteile aus Kunststoff, beispielsweise aus UV- beständigem Polypropylen. Von den in Gebrauchslage einander zugekehrten Rändern der Seitenwände von Unterteil 2 und Deckel 3 stehen Randflansche 4 ab, die nach dem Einlegen eines Dichtringes in in den Randflanschen 4 vorgesehene Nuten miteinander durch mehrere Schrauben dicht verbunden werden können.

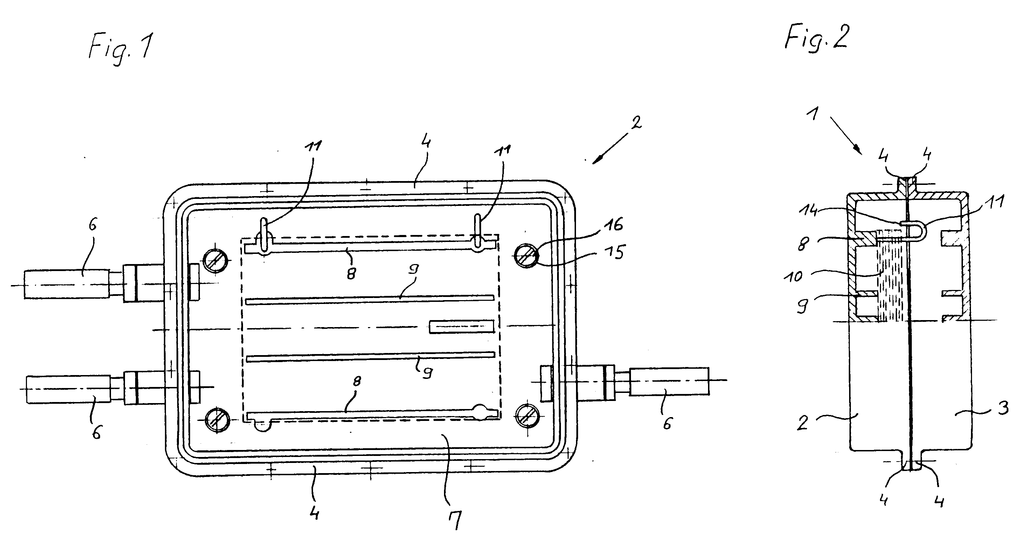

Die erfindungsgemäße Muffe kann als End-, Durchgangs-, Abzweig- oder Verteilermuffe ausgeführt sein, je nachdem, wieviele Kabeleinführungen 6 in der Wand des Unterteils 2 des Gehäuses 1 vorgesehen sind. Der in Fig. 1 gezeigte Unterteil 2 ist beispielsweise als Unterteil für eine Abzweigmuffe bestimmt, da er drei Kabeleinführungen 6 mit Schrumpfschlauchansätzen besitzt.

Vom Boden 7 des Unterteils 2 ragen Rippen 8 und 9 in das Innere des Unterteils 2. Diese Rippen 8 und 9 dienen u.a. als Auflage für im Inneren des Gehäuses 1 angeordnete Taschen 10, wie dies in Fig. 2 gezeigt ist.

In die in Fig. 1 oben liegende Rippe 8 sind Haken 11 eingesetzt, in welche die Taschen 10 mit Löchern 12, die im Bereich einer Randleiste 13 der Taschen 10 vorgesehen sind, eingehängt werden können. Aus Fig. 2 ist ersichtlich, daß das umgebogene freie Ende 14 der (beiden) Haken 11 ein Stück unter den oberen Rand des Unterteils 2 ragen. Dadurch können die Taschen 10 einzeln ohne weiteres über die Haken 11 gehängt werden, fallen aber von diesen nicht herunter, wenn sie bei auf einer Unterlagefläche mit ihrem Boden 7 aufliegendem Unterteil 2 auf den in Fig. 1 oben angeordneten Rand des Unterteiles 2 aufliegend umgeklappt werden.

Am Boden 7 des Unterteiles 2 sind noch als Befestigungspunkte für Zugentlastungsteile 42, 43 der Lichtwellenleiter 35, 36 dienende Ansätze 15 vorgesehen, in die Schrauben 16 eingedreht sind.

Die erfindungsgemäße Muffe ist sowohl für Erd-, Schacht-, Freimast- und Innenraummontage geeignet.

Die erfindungsgemäße Muffe kann wie folgt verwendet werden:
Nachdem die an- und abführenden Lichtwellenleiterkabel 35 und 36 über die bereits montierten Kabeleinführungen 6 eingeführt worden sind, werden die Schrumpfschlauchstücke der Kabeleinführungen 6, die innen eine thermoplastische Kleberbeschichtung aufweisen, abgedichtet. Nun werden die Zugentlastungsteile 42 und 43 der Lichtwellenleiter 35 und 36 an den Befestigungsstellen 15 bzw.16 festgelegt.

Nachdem die Kabel 35 und 36 so in die Muffe eingeführt, zugentlastet, die Glasfasern an der Spleißstelle 41 gespleißt worden sind und ein Spleißschutz 40 über die Spleißstelle 41 geschoben worden ist, wird jede Faser einzeln in eine der Taschen 10, die beispielsweise aus Nylonfolie bestehen und durchsichtig sind, eingelegt. Durch die spezielle Ausführung der Taschen 10 mit den Zugangsöffnungen 31, 32, 33 und 34 in deren Innenraum können die Fasern 37 und 38 von jeder Seite in die Tasche 10 eingelegt bzw. aus dieser herausgeführt werden. Zum Einlegen der Spleiße 39 in die einzelnen Taschen 10 werden die Taschen 10 aus der weiter oben beschriebenen, aus dem Unterteil 2 der Muffe herausgeklappten Lage nacheinander in den Unterteil 2 geklappt und jeweils ein Spleiß 39 in die Tasche 10 eingelegt. Diese Möglichkeit des Wegklappens der Taschen 10 bietet während der Montagearbeiten optimalen Komfort. Weiters ist durch die Taschen 10 gewährleistet, daß jede Faser separat und einzeln geschützt in einer Tasche 10 aufgenommen ist, so daß nicht nur ein Reiben mehrerer Fasern aneinander ausgeschlossen, sondern auch eine hervorragende Übersichtlichkeit gewährleistet ist.

## Patentansprüche

1. Muffe für Lichtwellenleiter mit einem aus Unterteil (2) und Deckel (3) bestehenden Gehäuse (1), mit wenigstens einer Kabeleinführung (6), wobei Unterteil (2) und Deckel (3) des Gehäuses (1) dicht miteinander verbunden werden können, und mit im Gehäuse (1) angeordneten Spleißschutzvorrichtungen in Form von Taschen (10), in welchen je ein Spleiß (39) aufgenommen ist, dadurch gekennzeichnet, daß die Muffe am Boden (7) des Unterteils (2) des Gehäuses (1) in das Innere des Gehäuses (1) ragende Haken (11) aufweist, auf welche die Taschen (10), die an einem ihrer Ränder (13) Löcher (12) aufweisen, eingehängt werden, und daß die gebogenen, freien Enden (14) der Haken (11) bis unter den oberen Rand des Unterteils (2) des Gehäuses (1) ragen.

2. Muffe nach Anspruch 1, dadurch gekennzeichnet, daß vom Boden (7) des Unterteils (2) des Gehäuses (1) nach oben ragende Rippen (8, 9) zum Abstützen der Taschen (10) vorgesehen sind, deren freie Ränder vom Boden (7) des Unterteils (2) einen kleineren Abstand aufweisen als die freien Enden (14) der Haken (11).

3. Muffe nach Anspruch 1 oder 2, dadurch gekennzeichnet, daß am Boden (7) des Unterteils (2) des Gehäuses (1) im Bereich der Ecken desselben Vorsprünge mit Befestigungsmitteln (15, 16) für Zugentlastungsteile (42, 43) der Lichtwellenleiter (35, 36) vorgesehen sind.

4. Muffe nach Anspruch 2, dadurch gekennzeichnet, daß die Haken (11) für die Taschen (10) in eine der Rippen (8) eingesetzt sind.

5. Muffe nach einem der Ansprüche 1 bis 4, dadurch gekennzeichnet, daß das Gehäuse (1) aus Kunststoff besteht und als End-, Durchgangs-, Abzweig- oder Verteilermuffe ausgeführt ist.

## Claims

1. Junction box for optical waveguide, having a housing (1) comprising bottom part (2) and cover (3), having at least one cable entry fitting (6), it being possible for the bottom part (2) and the cover (3) of the housing (1) to be tightly connected to one another, and having, arranged in the housing (1), splice protection devices in the form of pockets (10) in each of which a splice (39) is received, characterized in that the junction box has on the base (7) of the bottom part (2) of the housing (1) hooks (11) which project into the interior of the housing (1) and on which the pockets (10), which have holes (12) on one of their edges (13), are suspended, and in that the bent free ends (14) of the hooks (11) project below the upper edge of the bottom part (2) of the housing (1).

2. Junction box according to Claim 1, characterized in that ribs (8, 9) which project upwards from the base (7) of the bottom part (2) of the housing (1) are provided to support the pockets (10), whereof the free edges have a smaller spacing from the base (7) of the bottom part (2) than the free ends (14) of the hooks (11).

3. Junction box according to Claim 1 or 2, characterized in that projections having securing means (15, 16) for strain relief parts (42, 43) of the optical waveguides (35, 36) are provided on the base (7) of the bottom part (2) of the housing (1) in the region of the corners thereof.

4. Junction box according to Claim 2, characterized in that the hooks (11) for the pockets (10) are set in one of the ribs (8).

5. Junction box according to one of Claims 1 to 4, characterized in that the housing (1) is of synthetic material and is constructed as an end junction box, a through junction box, a branch junction box or a distribution junction box.

## Revendications

1. Boîte de jonction pour guides d'ondes lumineuses avec un carter (1) constitué d'une partie inférieure (2) et d'un couvercle (3), avec au moins une entrée de câble (6), la partie inférieure (2) et le couvercle (3) pouvant être reliés de manière étanche l'un à l'autre et avec des dispositifs de protection d'épissures disposés dans le carter (1) sous forme de poches (10) dans lesquelles est reçue respectivement une épissure (39),
caractérisée en ce que la boîte de jonction présente, sur le fond (7) de la partie inférieure (2) du carter (1), des crochets (11) se dressant à l'intérieur du carter (1) sur lesquels les poches (10), qui présentent des trous (12), à l'un de leurs bords (13), peuvent être suspendues, et que les extrémités libres recourbées (14) des crochets (11) se dressant jusqu'au-dessous du bord supérieur de la partie inférieure (2) du carter (1).

2. Boîte de jonction selon la revendication 1,
caractérisée en ce que des nervures (8, 9) sont prévues se dressant vers le haut depuis le fond (7) de la partie inférieure (2) du carter (1), pour le support des poches (10) dont les bords libres présentent par rapport au fond (7) de la partie inférieure (2) un écartement plus faible que les extrémités libres (14) des crochets (11).

3. Boîte de jonction selon la revendication 1 ou 2,
caractérisée en ce que des saillies avec des moyens de fixation (15, 16) pour des pièces de soulagement de traction (42, 43) des guides d'ondes lumineuses (35, 36) sont prévues sur le fond (7) de la partie inférieure (2) du carter (1) dans la région des coins de celle-ci.

4. Boîte de jonction selon la revendication 2,
caractérisée en ce que les crochets (11) pour les poches (10) sont logés dans l'une des nervures (8).

5. Boîte de jonction selon l'une des revendications 1 à 4,
caractérisée en ce que le carter (1) en matière synthétique et est de préférence réalisée sous forme de boîte de jonction d'extrémité de manchon de passage, de manchon, de branchement ou de manchon de distribution.
